(19) Europäisches Patentamt
European Patent Office
Office européen des brevets

(11) **EP 4 145 182 A1**

(12) **EUROPEAN PATENT APPLICATION**

(43) Date of publication:
**08.03.2023 Bulletin 2023/10**

(21) Application number: **21194629.8**

(22) Date of filing: **02.09.2021**

(51) International Patent Classification (IPC):
**G01S 19/44** $^{(2010.01)}$

(52) Cooperative Patent Classification (CPC):
**G01S 19/44**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **u-blox AG**
**8800 Thalwil (CH)**

(72) Inventor: **PARKINS, Alex**
**Hemel Hempstead (GB)**

(74) Representative: **Elkington and Fife LLP**
**Prospect House**
**8 Pembroke Road**
**Sevenoaks, Kent TN13 1XR (GB)**

(54) **GNSS POSITIONING WITH FIXING AND VALIDATION OF CARRIER RANGE AMBIGUITIES**

(57)    A method and apparatus are provided for fixing and verifying ambiguities based on GNSS signals. First and second estimators (102, 104) are provided for estimating ambiguities. In the first estimator, fixed ambiguities are fed back to the estimator at a subsequent epoch. In the second estimator, there is no feedback of fixed ambiguities. The fixed ambiguities produced from the two estimators are compared, in order to verify the validity of the fixed ambiguities produced via the first estimator. Depending on a result of the comparison, the fixed ambiguities produced via the first estimator are modified. The modified fixed ambiguities may be used to calculate a position fix.

FIG. 1

EP 4 145 182 A1

**Description**

FIELD OF THE INVENTION

The present invention relates to positioning using Global Navigation Satellite Systems (GNSSs). In particular, it relates to positioning that is based at least in part on measurements of the carrier phase of GNSS signals.

BACKGROUND OF THE INVENTION

Techniques for GNSS positioning are well known in the art. Existing GNSSs include the Global Positioning System (GPS), Galileo, GLONASS, and Bei-Dou. Each GNSS comprises a constellation of satellites, also known in the art as "space vehicles" (SVs). Typically, each SV transmits a number of signals. These are received by a receiver whose position it is desired to calculate. The receiver can make a number of ranging measurements using the signals, to derive information about the distance between the receiver and respective satellites. When a sufficient number of measurements can be made, the receiver's position can then be calculated by multilateration.

A pseudorange is one kind of ranging measurement. This is a measurement of the code phase of a pseudorandom noise (PRN) code modulated onto a carrier signal transmitted by a SV. Pseudorange measurements can achieve positioning accuracy of the order of metres. However, they can suffer from reduced accuracy/reliability in the presence of multipath - for example, in dense urban environments.

Carrier phase measurements are another kind of ranging measurement. Performing ranging measurements on the carrier, as well as or instead of the modulating PRN code, can enable greater accuracy in the position fix - for example, accuracy of the order of centimetres may be possible. Carrier phase measurements may also be more robust in the presence of multipath.

However, one difficulty with carrier phase measurements is that they contain an inherent ambiguity. Although it may be possible to measure the phase of the carrier accurately within a given cycle (wavelength), this does not uniquely determine the ranging measurement, because there is an unknown integer number of wavelengths of the carrier between the SV and the receiver. The benefits of carrier phase based positioning can only be realised if these ambiguities are resolved.

Various techniques have been proposed for "fixing" the ambiguities. This involves constraining the solution based on the knowledge that the ambiguities are integer quantities. In some cases, these techniques fix each ambiguity to an integer value; however, this is not essential. In some cases, ambiguities may be fixed to integer values but then further processed such that the eventual "fixed" ambiguities are floating point values. In some cases, linear combinations of ambiguities may be fixed, instead of individual ambiguities. In some cases, a subset of the ambiguities may be fixed. One known technique for fixing carrier range ambiguities is the Least squares AMBiguity Decorrelation Adjustment (LAMBDA) method (Teunissen PJG, "The least-squares ambiguity decorrelation adjustment: a method for fast GPS integer ambiguity estimation", Journal of Geodesy 70:65-82, 1995).

When ambiguities are fixed successfully (that is, correctly), the positioning solution may be calculated very accurately (accuracy of the order of centimetres, as mentioned above). However, if the ambiguities are fixed incorrectly, it can actually introduce significant errors into the position solution. That is, the positioning solution may in some cases be worse (less accurate) than if the ambiguities had not been fixed. Worse still, this error may be very difficult to detect in the short term. And, until the error can be detected, the (inaccurate) positioning solution will be believed to be very accurate. It would be desirable to provide ways of detecting and correcting such incorrectly fixed ambiguities.

SUMMARY OF THE INVENTION

Carrier range ambiguities can be fixed using different strategies. There might be no single "best" strategy that performs optimally in all practical circumstances. Rather, different strategies may have different strengths and weaknesses, and may be more or less suited to particular circumstances.

Once ambiguities are fixed at one epoch, it may be advantageous to hold them constant at successive epochs. This can allow an estimator to benefit as much as possible from the information obtained from the fixing, and use this information to improve the estimation of the other state variables (such as position, velocity, and/or time variables). This works well provided the fixing is correct - that is, provided the ambiguities are fixed at their true values. However, if the ambiguities have been fixed incorrectly, this approach can cause errors to propagate in the other variables (in particular, the position, velocity, and/or time variables, but not limited to these variables). The inventors have recognised that it would be desirable to obtain the benefits of holding fixed ambiguities constant (that is, not estimating/updating them at subsequent epochs), while mitigating the problems caused by incorrect fixing.

In some examples according to the present disclosure, fixed ambiguities are held constant, in one estimator, between successive epochs of the estimator. Meanwhile, the ambiguities are estimated and fixed at each epoch by another estimator. The ambiguities that are estimated and fixed at each epoch are used to validate those that are being held constant. This can help to identify if those being held constant are in fact erroneous.

A method and apparatus are provided for fixing and verifying ambiguities based on GNSS signals. First and second estimators are provided for estimating ambiguities. In the first estimator, fixed ambiguities are fed back to the estimator at a subsequent epoch. In the second estimator, there is no feedback of fixed ambiguities. The fixed ambiguities produced from the two estimators are compared, in order to verify the validity of the fixed ambiguities produced via the first estimator. Depending on a result of the comparison, the fixed ambiguities produced via the first estimator are modified. The modified fixed ambiguities may be used to calculate a position fix.

The invention is defined by the claims. In one aspect, there is provided a method of verifying fixed ambiguities based on GNSS signals, the method comprising, at a first epoch:

estimating a first state vector comprising a first set of float carrier range ambiguities using a first estimator, based on first observations of the GNSS signals; fixing one or more first carrier range ambiguities based on the first set of float carrier range ambiguities,

the method further comprising, at a second epoch:

estimating a portion of the first state vector using the first estimator, based on new first observations of the GNSS signals, wherein the fixed one or more first carrier range ambiguities from the first epoch are held constant, and wherein estimating the portion of the first state vector comprises estimating states of the first state vector other than those that are held constant; estimating a second state vector comprising a second set of float carrier range ambiguities using a second estimator, based on second observations of the GNSS signals; fixing one or more second carrier range ambiguities based on the second set of float carrier range ambiguities; comparing the fixed one or more first carrier range ambiguities with the fixed one or more second carrier range ambiguities; and modifying at least one of the fixed one or more first carrier range ambiguities based on a result of the comparing.

According to this approach, the fixed second carrier range ambiguities can provide a "sanity check", or means of validating the fixed first carrier range ambiguities. The estimation of the second state vector includes estimating one or more states that are held constant (that is, are not estimated) in the first state vector. Therefore, the second state vector is calculated in a different way from the first state vector. This independence facilitates the validation exercise. In particular, because states are not held constant in the second estimator, but are estimated at each epoch, this estimator may be able to more quickly identify, and recover more quickly from, errors in fixing the ambiguities. Nevertheless, when the ambiguities are fixed correctly, it can be expected that the first estimator (which feeds back the fixed ambiguities and holds them constant) will be capable of providing more accurate positioning results. The approach of comparing the fixed ambiguities produced using feedback with those produced without using feedback can therefore help the position estimation to gain the benefits (and mitigate the limitations) of both approaches.

Optionally, the method may further comprise estimating one or more ranging measurements based on the modified at least one of the fixed one or more first carrier range ambiguities. Alternatively or in addition, the method may further comprise estimating a position based at least in part on the modified at least one of the fixed one or more first carrier range ambiguities. In some examples, the position may be estimated by the first estimator. In some examples, the position may be estimated by a third estimator (as discussed later, below).

Typically, the position is estimated based on the fixed one or more first carrier range ambiguities, including the at least one modified fixed first carrier range ambiguity.

Optionally, at the first epoch the method comprises:

estimating the second state vector comprising the second set of float carrier range ambiguities, based on second observations of the GNSS signals; and fixing one or more second carrier range ambiguities, based on the second set of float carrier range ambiguities.

At the second epoch, estimating the second state vector includes estimating the one or more second carrier range ambiguities that were fixed at the first epoch. In other words, the fixed one or more second carrier range ambiguities are not fed back into the second estimator at the second epoch - they are re-estimated without fixing them.

"Fixing" a float carrier range ambiguity means using the integer property of the ambiguity to constrain at least one estimated state. Fixing a float carrier range ambiguity may comprise fixing it to an integer value. However, the "fixing" may comprise additional processing of the float carrier range ambiguity before or after fixing it to the integer value. This may result in the fixed carrier range ambiguity taking a non-integer value. Consequently, in some embodiments, the fixed carrier range ambiguities may be fixed integer carrier range ambiguities. In other embodiments, the fixed carrier range ambiguities may be non-integer carrier range ambiguities - this is also known as "partial" fixing.

For example, the method may comprise: linearly transforming the first set (or the second set) of float carrier range ambiguities; fixing one or more first (or second) carrier range ambiguities based on the linearly transformed first set (or linearly transformed second set); and inverse transforming the one or more fixed first carrier range ambiguities (or the one or more fixed second carrier range ambiguities).

The first state vector may further comprise position variables. Similarly, the second state vector may further comprise position variables.

The method may be repeated for each of a plurality of epochs.

In general, each of the first set and the second set comprises one or more float carrier range ambiguities. In most cases, each set comprises multiple float carrier range ambiguities. However, in some embodiments, or for some epochs, the first set may comprise just one float carrier range ambiguity. This may be the case, in particular, if a number of first carrier range ambiguities have already been fixed at a previous epoch.

The one or more fixed first carrier range ambiguities may be a complete set of carrier range ambiguities, wherein a first carrier range ambiguity is fixed for every observed carrier in every observed GNSS signal - and therefore for every corresponding state in the state vector. Alternatively, the one or more fixed first carrier range ambiguities may be a partial set of carrier range ambiguities, wherein the number of fixed first carrier range ambiguities is less than the number of observed carriers in the observed GNSS signals. The same is true for the one or more fixed second carrier range ambiguities.

In addition to modifying at least one of the fixed one or more first carrier range ambiguities, the method may further comprise modifying (for example, resetting) some or all of the other states of the first state vector, based on a result of the comparing. This may be done to clear out states that have been "contaminated" by incorrectly fixed ambiguities. The estimation of all states in the state vector is liable to be affected by the incorrect fixing and feeding-back of ambiguities. This is because the other states will have to shift to try to be consistent with the (incorrect) fixed, fed-back ambiguities. The "other" states that are modified (for example, reset) may include but are not limited to: ambiguity states, position states, velocity states, or time states.

The comparing may comprise determining that at least one of the fixed one or more first carrier range ambiguities is different from a corresponding one of the fixed one or more second carrier range ambiguities.

The modifying may comprise, in response, resetting the at least one fixed first carrier range ambiguity that is determined to be different from its counterpart fixed second carrier range ambiguity. Some (or all) additional states of the first state vector may also be reset.

The comparing may comprise determining that more than a predetermined proportion of the fixed first carrier range ambiguities are different from the corresponding fixed second carrier range ambiguities.

The modifying may comprise, in response, resetting all of the fixed one or more first carrier range ambiguities and/or resetting all of the fixed one or more second carrier range ambiguities. The modifying may comprise resetting all states of the first state vector or the second state vector (or both).

The predetermined proportion may be 10%, 20%, 30%, 40%, 50%, 60%, 70%, 80% or 90% of the fixed first carrier range ambiguities.

The comparing may comprise determining that a number of fixed second carrier range ambiguities is greater than a number of fixed first carrier range ambiguities, or determining that an uncertainty associated with the second state vector after fixing of the second carrier range ambiguities is lower than a respective uncertainty associated with the first state vector.

The number of ambiguities fixed by the two estimators can vary for several reasons. In some embodiments, one or more ambiguities may be fixed only if the fixed ambiguities are associated with a sufficiently high confidence. If the confidence is below a threshold value, for example, the algorithm may decide that it is not appropriate to fix the ambiguities. This may occur for either estimator. Additionally, in the case of the first estimator, the fixed ambiguities that were fed back at a previous epoch may cease to be fixed at a subsequent epoch. Phase lock may be lost for the corresponding satellite signal, for example, meaning that the previously fixed value is no longer valid. In this case, the ambiguity should be re-estimated before an attempt is made to fix it again.

Comparing the number of ambiguities that are currently fixed for each estimator can provide an indication of which set of fixed ambiguities is more likely to be correct.

The confidence values associated with fixed ambiguities may be based on variance or covariance estimates associated with states in the filter, for example.

The modifying may comprise, in response to determining that more second carrier range ambiguities are fixed (or determining that the second state vector has lower uncertainty), replacing the fixed one or more first carrier range ambiguities with the fixed one or more second carrier range ambiguities. When fixed ambiguities are replaced in this way, it may be beneficial to also adjust some other states (for example, states characterising ionospheric delay or position).

Modifying the at least one of the fixed one or more first carrier range ambiguities may comprise resetting it.

The resetting may comprise (re-)estimating the ambiguity, either at the second epoch or a subsequent epoch. The method may further comprise resetting other ambiguities and/or other states of the first state vector. Optionally, the entire first state vector is reset.

If the first estimator includes a variance / covariance estimate for the states (as in the case of a Kalman filter, for example), then "resetting" states may comprise artificially increasing the variance/covariance estimate for that state. This artificial increase can allow the state variable the freedom to re-converge to a more accurate value.

Modifying the at least one of the fixed one or more first carrier range ambiguities may comprise resetting all of the fixed one or more first carrier range ambiguities and/or resetting all of the fixed one or more second carrier range ambiguities.

The resetting may comprise (re-)estimating all of the carrier range ambiguities, either at the second epoch or a subsequent epoch. The resetting may be applied to the entire state vector - that is, the entire first state vector and/or the entire second state vector may be reset. As explained above, resetting may be achieved by artificially increasing a variance or covariance estimate, for some estimators.

Modifying the at least one of the fixed one or more first carrier range ambiguities may comprise replacing the fixed one or more first carrier range ambiguities with the fixed one or more second carrier range ambiguities.

In this approach, all fixed first carrier range ambiguities are replaced with their counterpart fixed second carrier range ambiguities. If the second carrier range ambiguities have converged and been fixed more accurately, then this replacement may improve the accuracy of the first estimator. A covariance matrix associated with the first state vector may also be replaced with a covariance matrix associated with the second state vector.

In some examples, the second estimator may estimate a different set of states from the first estimator.

Optionally, the second estimator may estimate a subset of the states of the first estimator.

The set of states estimated by the second estimator may be selected based on one or more of the following criteria: selecting GNSS signals that have a carrier-to-noise ratio above a predetermined threshold; and selecting GNSS signals of SVs that are higher than a minimum predetermined elevation above the horizon.

Alternatively or in addition, the first and second estimators may differ in other ways. For example, the estimation of atmospheric effects (such as ionospheric effects) may be estimated differently in the respective estimators. For instance, one of the estimators may estimate ionospheric effects and the other estimator might not estimate ionospheric effects.

The method may further comprise, at the second epoch: estimating a further state vector comprising a further set of float carrier range ambiguities using a further estimator, based on observations of the GNSS signals; fixing one or more further carrier range ambiguities based on the further set of float carrier range ambiguities; comparing the fixed one or more first carrier range ambiguities with the fixed one or more further carrier range ambiguities; and modifying at least one of the fixed one or more first carrier range ambiguities based on a result of the comparing.

The further estimator may provide an additional sanity-check, cross-check or validation of the fixed first carrier range ambiguities.

The further estimator may be different from the second estimator. This can help to build further diversity and independence into the validation.

The method may comprise estimating a position based on the fixed one or more first carrier range ambiguities using a third estimator.

An update interval of the third estimator may be shorter than an update interval of the first estimator and the second estimator. That is, the third estimator may produce position estimates more frequently than the first and second estimators produce estimates of the float carrier range ambiguities. An update interval is the time between successive estimates produced by an estimator. The first and second estimators may have the same update interval. The time of an update is known as an "epoch".

Alternatively or in addition, the position may be estimated using at least one of the first estimator and the second estimator.

In some embodiments, the first and second estimators may be identical. The further estimator (if used) may also be identical to the first and second estimator.

The new first observations and the second observations may comprise or consist of the same observations.

The first estimator and the second estimator may be identical estimators.

The first estimator may be a first Kalman filter and the second estimator may be a second Kalman filter. The first and second Kalman filters may be identical or different in structure.

The third estimator may be a third Kalman filter.

Also provided is a computer program comprising computer program code configured to cause one or more physical computing devices to perform all the steps of the method as claimed in any one of the preceding claims when said computer program is run on said one or more physical computing devices. The computer program may be stored on a computer readable medium, optionally a non-transitory computer readable medium.

Also provided is an apparatus configured to verify fixed ambiguities based on GNSS signals, the apparatus comprising:

> a first estimator, configured to, at a first epoch, estimate a first state vector comprising a first set of float carrier range ambiguities, based on first observations of the GNSS signals; and
> a first ambiguity resolution unit, configured to, at the first epoch, fix one or more first carrier range ambiguities based on the first set of float carrier range ambiguities, the fixed one or more first carrier range ambiguities being fed back to the first estimator at a second epoch,
> wherein the first estimator is further configured to, at the second epoch, estimate a portion of the first state vector, based on new first observations of the GNSS signals, wherein the fed-back fixed one or more first carrier range ambiguities from the first epoch are held constant, and wherein estimating the portion of the first state vector comprises estimating states of the first state vector other than those that are held constant,

the apparatus further comprising:

a second estimator, configured to, at the second epoch, estimate a second state vector comprising a second set of float carrier range ambiguities, based on second observations of the GNSS signals;
a second ambiguity resolution unit, configured to, at the second epoch, fix one or more second carrier range ambiguities based on the second set of float carrier range ambiguities; and
an ambiguity processing unit, configured to:

compare the fixed one or more first carrier range ambiguities with the fixed one or more second carrier range ambiguities, and modify at least one of the fixed one or more first carrier range ambiguities based on a result of the comparing.

The apparatus may be configured to estimate a position based at least in part on the modified at least one of the fixed one or more first carrier range ambiguities.

The apparatus may be a GNSS receiver. The GNSS receiver may further comprise: an RF front end, configured to receive and down-convert the GNSS signals; and a baseband processor, configured to generate the first observations and the second observations by analysing the GNSS signals received and down-converted by the RF front end.

The apparatus may comprise a delay element, configured to: receive the fixed one or more first carrier range ambiguities from the first ambiguity resolution unit at the first epoch; store them; and feed them back to the first ambiguity resolution unit at the second epoch.

The apparatus may further comprise a third estimator, wherein the third estimator is configured to estimate the position based at least in part on the modified at least one of the fixed one or more first carrier range ambiguities.

## BRIEF DESCRIPTION OF THE DRAWINGS

The invention will now be described by way of example with reference to the accompanying drawings, in which:

Fig. 1 is a schematic block diagram of a GNSS receiver according to an example;
Fig. 2 is a flowchart illustrating a method according to an example; and
Fig. 3 illustrates an implementation of the method of Fig. 2 over multiple epochs.

It should be noted that these figures are diagrammatic and not drawn to scale.

## DETAILED DESCRIPTION

Reference will now be made in detail to embodiments of the invention, examples of which are illustrated in the accompanying drawings. The described embodiments should not be construed as being limited to the descriptions given in this section; the embodiments may have different forms

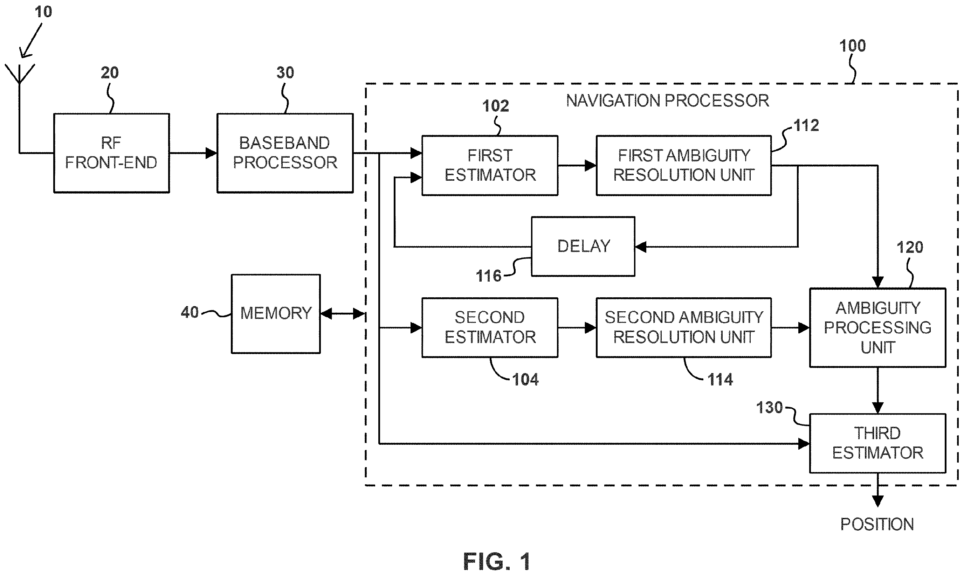

Fig. 1 is a block diagram of a GNSS receiver according to an example. The GNSS receiver may be configured to receive satellite signals from a single GNSS constellation (for example, GPS), or it may be configured to receive satellite signals from multiple constellations (for example, GPS, Galileo, GLONASS, and BeiDou). The GNSS receiver comprises an antenna 10 for receiving satellite signals. An RF front-end 20, coupled to the antenna 10, is configured to down-convert and digitise the satellite signals received via the antenna 10. The RF front-end essentially conditions the signals for subsequent signal processing. Other typical tasks performed by the front-end include filtering, amplification and automatic gain control.

The GNSS receiver further comprises a baseband processor 30, coupled to the output of the RF front-end. The baseband processor 30 is responsible for processing the down-converted, digitised satellite signals output by the RF front-end, to produce GNSS observables. The observables include code pseudoranges and carrier-phase measurements. They may optionally also include additional information, such as a Doppler frequency and carrier-to-noise ratio for each carrier of each satellite signal received by the front-end.

The GNSS receiver further comprises a navigation processor 100, coupled to the baseband processor 30, and configured to receive the GNSS observables from it. Also provided is a memory 40 in communication with the navigation processor 100. The memory 40 is configured to store software/firmware to be executed on the navigation processor. The software/firmware is configured to control the navigation processor to carry out a processing method according to the present example. The memory may also be configured to store data that is used as input to the processing method and/or to store data that is output by the processing method.

The navigation processor 100 is shown as comprising a number of functional units. In the present example, these functional units are defined by modules in the software/firmware running on the processor 100. However, it should be understood that, in other examples, these units may represent hardware units that are configured to perform the same functions as the equivalent software units. Therefore, the following description will make no distinction between software- and hardware-based implementations.

As shown in the block diagram of Fig. 1, the navigation processor 100 comprises a first estimator 102;

and a second estimator 104. The first and second estimators 102 and 104 are configured to receive GNSS observables from the baseband processor 30. The processor 100 further comprises a first ambiguity resolution unit 112, coupled to an output of the first estimator 102; and a second ambiguity resolution unit 114, coupled to an output of the second estimator 104. The navigation processor 100 also comprises an ambiguity processing unit 120 and a third estimator 130. The ambiguity processing unit 120 is coupled to outputs of the first ambiguity resolution unit 112 and second ambiguity resolution unit 114, and is configured to validate the ambiguities fixed by the first ambiguity resolution unit 112, using the ambiguities fixed by the second ambiguity resolution unit 114. The third estimator 130 is coupled to an output of the ambiguity processing unit 120 and is also configured to receive GNSS observables from the baseband processor 30.

In the present example, each of the first, second, and third estimators is a Kalman filter. A Kalman filter is a recursive state estimator. At each of a plurality of time increments (epochs), the Kalman filter estimates the current value of a state vector of state variables, along with their associated uncertainties. The estimate for the current state vector is based on the estimated state from the previous epoch and the current measurements. In the context of navigation, the state variables estimated by the Kalman filter generally include position variables and optionally velocity and other variables. The use of Kalman filtering (also known as linear quadratic estimation) in GNSS navigation is well known in the art and will not be described in further detail here.

The navigation processor 100 also includes a delay element 116, configured to receive fixed carrier range ambiguities from the first ambiguity resolution unit 112, store/hold them for an update interval of the first estimator 102, and feed them back into the first estimator 102 for the next epoch.

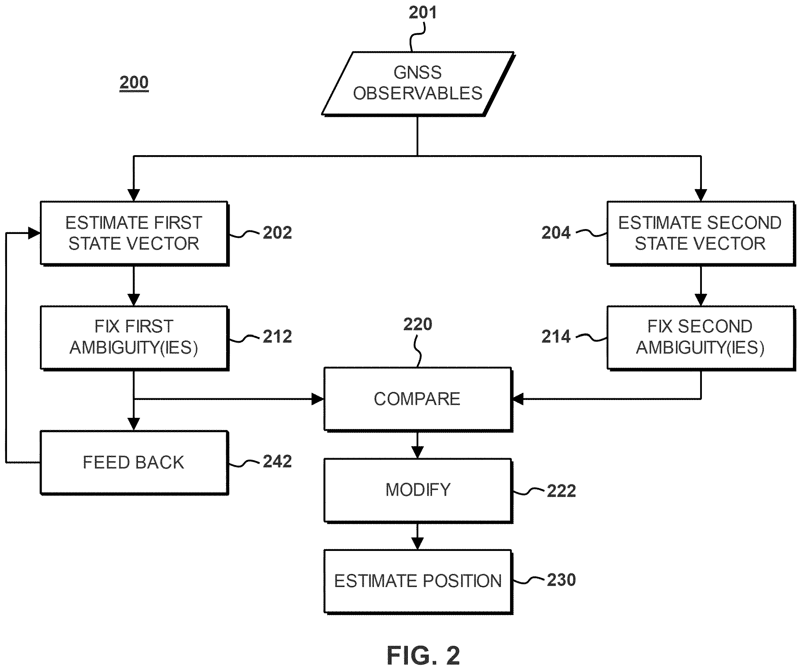

A method 200 carried out by the navigation processor 100 of Fig. 1 will now be described with reference to Fig. 2. In step 202, the first estimator 102 estimates a first state vector. The first state vector includes at least a first set of float carrier range ambiguities; however, it typically also includes additional state variables. For example, it may include position and velocity variables. The first estimator 102 estimates the float carrier range ambiguities (and other state variables) based on all of the current GNSS observables 201. The ambiguities are estimated as real numbers and (in the present implementation) they are stored as floating-point values, because the estimator (a Kalman filter) does not take into account the fact that the actual ambiguities are constrained to be integers. (It should be understood that the ambiguities could be represented as fixed-point values, in other implementations - the important thing to note is that they are not integer values.)

In step 204, the second estimator 104 estimates a second state vector. This includes a second set of float carrier range ambiguities. Like the first state vector, the second state vector typically also includes additional state variables. For instance, it may include position and velocity variables. The second estimator 104 estimates the second set of float carrier range ambiguities in the same way that the first estimator 102 estimates the first set of float carrier range ambiguities. Again, the estimated ambiguities have floating-point values.

Note that the state vectors do not include states for every single SV in each constellation, in the present implementation. In practice, the receiver has biases that make the (true) ambiguities non-integer values. The receiver bias is the same for all signals of the same type - for instance, all GPS L1 signals have the same bias. In order to eliminate these biases, the system chooses a reference signal and compares all measurements of that type with the reference (by subtraction), thereby cancelling the bias. This is equivalent to estimating the bias as a state and constraining the ambiguity of a reference satellite to an integer. Consequently, in the present implementation there is not an ambiguity for every signal from each satellite, because the system does not estimate the ambiguities for the reference signals themselves.

Although not shown explicitly in Fig. 2, it should be understood that - in general, other than at the very first epoch after start-up - the state estimation step 202 is based not only on the current measurements (that is, the GNSS observables 201) but also on the previously estimated first state vector, from the preceding epoch. In other words, the first estimator 102 "remembers" the estimated states from one epoch to the next and uses this information in each update step. This is because - as explained already above - the first estimator 102 is a Kalman filter, in the present example. Similarly, the second estimator 104 is a Kalman filter that retains the estimated second state vector from one epoch to the next. The state estimation step 204 is therefore based not only on the current measurements (GNSS observables 201) but also on the previously estimated second state vector from the preceding epoch.

In step 212, the first ambiguity resolution unit 112 fixes one or more first carrier range ambiguities, based on the first set of float carrier range ambiguities. In the present example, the first ambiguity resolution unit 112 fixes individual, uncombined carrier range ambiguities for each carrier signal of each SV that has been acquired and tracked by the GNSS receiver and for which observables have been generated by the baseband processor 30. In the present example, the LAMBDA method is used to fix the uncombined ambiguities. LAMBDA produces integer-valued fixed ambiguities. In other examples, other algorithms may be used. These include but are not limited to the Best Integer Equivariant (BIE) estimation algorithm (see, for example: P. J. G. Teunissen, "Theory of integer equivariant estimation with application to GNSS", Journal of Geodesy (2003) 77: 402-410). Note that it is not essential for the first ambiguity resolution unit 112 to fix uncombined ambiguities. In some instances, it may fix linear combinations of ambiguities, such as widelane ambiguities.

In step 214, the second ambiguity resolution unit 114 fixes one or more second carrier range ambiguities, based on the second set of float carrier range ambiguities. The second ambiguity resolution unit 114 may use the same ambiguity fixing method as the first ambiguity resolution unit 112, or a different method. However, both estimators attempt to fix the same ambiguities - for example, uncombined ambiguities and/or widelane ambiguities.

The fixed first carrier range ambiguities, produced by the first ambiguity resolution unit 112, are fed back into the state estimation performed by the first estimator 102 at the next epoch. As mentioned above, this feedback is implemented by the delay element 116 of Fig. 1. It is indicated in Fig. 2 by step 242. The fed-back fixed first carrier range ambiguities are held constant at the next epoch (and all subsequent epochs until either phase lock is lost for the relevant SV signal, or the fixed ambiguities are modified in the manner explained below). This means that the first estimator 102 does not estimate the ambiguities at the next epoch. Only the remaining state variables of the first state vector are estimated.

Holding uncombined ambiguities constant is straightforward, since they appear explicitly in the first state vector of the first estimator 102. In the present implementation, the combined (widelane) ambiguities do not appear explicitly in the first state vector. In order to hold these constant, one of the associated uncombined ambiguities is estimated, while the other is forced to respect the fixed widelane ambiguity. In particular, in the present example, the float carrier range ambiguity is estimated for the L1 carrier; and the L2 float carrier range ambiguity measurement observes (that is, helps to estimate in the filter) the L1 carrier range ambiguity based on the fixed widelane ambiguity. Other implementations are possible. For example, the first estimator could be formulated to estimate the (uncombined, individual) L1 ambiguities and the combined (widelane) ambiguities. In this case, the combined (widelane) ambiguities would appear explicitly in the first state vector.

The use of feedback is a key difference between the first estimator 102 and the second estimator 104 - although the second ambiguity resolution unit 114 fixes ambiguities, these fixed ambiguities are not fed back into the second estimator 104. Therefore, the second estimator 104 estimates the entire second state vector at each epoch.

In step 220, the ambiguity processing unit 120 compares the fixed first carrier range ambiguities with the fixed second carrier range ambiguities. Depending on the result of this comparison, the ambiguity processing unit 120 may modify the fixed first carrier range ambiguities, in step 222. The purpose of the comparison is to verify whether the fixed first carrier range ambiguities are (likely to be) correct. In the event that the first carrier range ambiguities have been fixed incorrectly, the other state variables of the first state vector are likely to have been distorted by feeding back and holding constant of the incorrectly fixed ambiguities. Because the first estimator 102 treats the fixed ambiguities as being exactly correct, it will modify the other states to fit this assumption. In contrast, the second estimator 104 does not suffer such distortions, because the fixed second ambiguities are not fed back into it by the second ambiguity resolution unit 114. This means that the fixed second carrier range ambiguities are led more by the GNSS observables 201. The state variables in the second state vector cannot be corrupted by incorrect fixing and feedback of ambiguities.

To the extent that the fixed second carrier range ambiguities differ from the fixed first carrier range ambiguities, it suggests that the first carrier range ambiguities might have been fixed incorrectly. In this case, it may be beneficial to modify the fixed first carrier range ambiguities, with the aim of correcting them. On the contrary, if the fixed second carrier range ambiguities agree closely with the fixed first carrier range ambiguities, then it is probable that the fixed first carrier range ambiguities have been fixed correctly. In this case, the fixed first carrier range ambiguities are likely to form the best basis for calculating a position, velocity, time (PVT) solution. Consequently, they are not modified in this case.

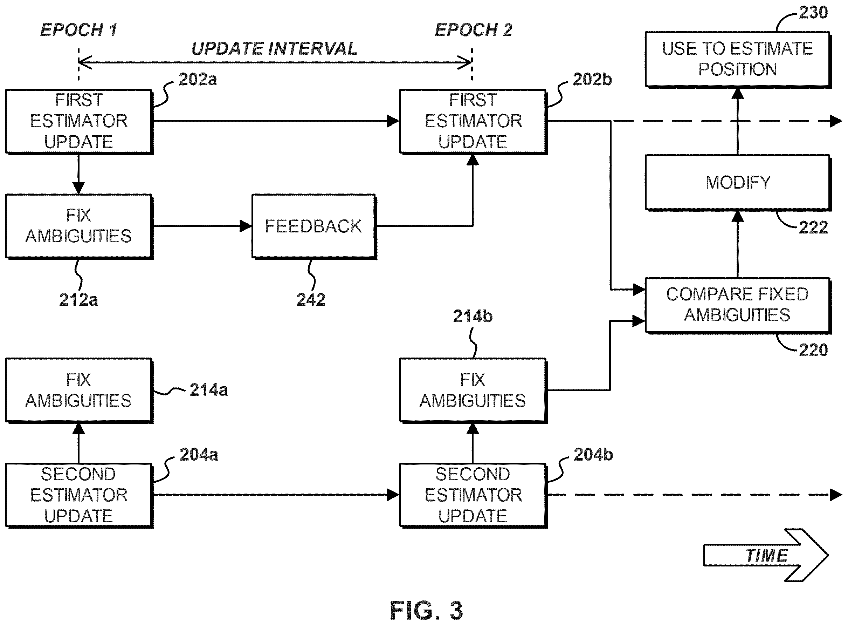

Further details of the comparison and modification steps 220 and 222 will be provided below. First, the operation of the method may be better understood by reference to Fig. 3, which explicitly shows the relevant steps as performed at two successive epochs. Time runs from left to right, in this diagram. The same reference numerals are used as in the method 200 of Fig. 2, with the addition of a suffix "a" to denote the first epoch and "b" to denote the second epoch. In the present example, because the first and second estimators 102 and 104 are identical Kalman filters, and because both of these estimators receive the same GNSS observables 201, the first and second state vectors will be identical at the first epoch. That is, the output of the first estimator 102 in the first iteration 202a of step 202 will be identical to the output of the second estimator 104 in the first iteration 204a of step 204.

The difference between the two branches is that the ambiguities fixed by the second ambiguity resolution unit 114 at the first epoch, in step 214a, are not fed back into the second estimator 104. In contrast, the ambiguities fixed by the first ambiguity resolution unit 112 are fed back in step 242 so that they are held constant in the estimation of the first state vector at the second epoch, in step 202b. Note that the "feedback" of the ambiguities might look like they are fed forward in Fig. 3, but this is only because the operations have been unwrapped in time, from left to right.

As a result of the presence of feedback in one branch, the two estimators 102 and 104 can diverge in subsequent iterations. Both the first state vector and the second state vector are estimated by the respective estimators 102, 104, at each epoch. And both state vectors from one epoch are used in the respective state estimation at the next epoch (as indicated by the arrow joining steps 202a and 202b, and the arrow joining steps 204a and 204b). However, in the second estimator 104, the second carrier range ambiguities are free to change to follow the latest GNSS observables. In the first estimator 102, any carrier range ambiguities that were fixed at the first epoch cannot change at the second epoch. The other state variables in the first state vector have to adapt to best accommodate this constraint.

Fig. 3 shows different operations occurring at each epoch. For example, the steps of comparing 220 and modifying 222 ambiguities are not shown for the first epoch; and the steps of fixing and feeding back the first carrier range ambiguities are not shown for the second epoch. In practice however, the same steps are performed at every epoch. Newly acquired SVs (or SVs for which phase lock was lost but then re-acquired) will have their ambiguities estimated (step 202) and fixed (step 212), at each epoch. Once fixed, they will be fed back (step 242) and held constant in the first estimator 102, either until phase lock is lost, or until the fixed ambiguities are modified (corrected) based on the information provided by the second estimator 104. The comparison in step 220 is between the currently fixed set of ambiguities provided by both branches of the system.

The steps of comparing 220 and modifying 222 fixed ambiguities can be implemented using various approaches (which are not mutually exclusive and may be combined).

In one example, the comparing 220 involves comparing the respective fixed ambiguities, one by one. If any ambiguity fixed by the second ambiguity resolution unit 114 differs from the respective ambiguity fixed by the first ambiguity resolution unit 112, then the step 222 of modifying the fixed first carrier range ambiguities may comprise resetting (only) the differing ambiguities. In the present implementation, both ambiguities of the differing pair are reset - that is, the fixed first ambiguity is reset and the fixed second ambiguity is also reset. This means that neither estimator (and neither fixed ambiguity) is trusted over the other. To the extent that the fixed ambiguities differ, they are both treated as inherently untrustworthy and they should be re-estimated by both estimators. An alternative may be to reset only the fixed first ambiguity when it differs from the respective fixed second ambiguity - that is, the second estimator may be trusted over the first estimator, when they differ in respect of a fixed ambiguity.

The resetting may be performed in a variety of ways. In one example, when an ambiguity is reset, all information about that ambiguity is discarded from the estimator. Both the estimated value of the ambiguity and any estimated variance or covariance may be discarded. They may be replaced with random guesses or arbitrary fixed numbers. This will force the estimator to re-estimate the ambiguity from scratch, with no assistance from the previously estimated information. An alternative - in the case of a Kalman filter - is to retain the previously estimated value of the ambiguity, but to artificially increase the values of the variance and covariance for that state, in the filter. This avoids discarding all information about the previous estimate of the state (which may in fact have been reasonably close to the correct value) bit it gives the estimate greater freedom to re-converge to a more accurate value. These two approaches may be considered a "hard" and "soft" reset, respectively. Both types should be understood to be within the scope of the term "reset", according to the present disclosure. Soft resetting is not limited to Kalman filters. It may be used in other estimators that rely on variance/covariance estimates to regulate the convergence of state estimates.

If ambiguities have been fixed incorrectly (as suggested by the discrepancy between at least one of the fixed first ambiguities and the respective fixed second ambiguity), then other states in the first state vector may have become corrupted as a result of this. Consequently, it may be advantageous to reset ambiguities (and/or other states) other than those that were identified as differing in the comparison step 220. In some cases, the entirety of one or both state vectors may be reset.

In one example, the comparing 220 involves counting the number of fixed ambiguities that differ between the two branches. In other words, the ambiguity processing unit 120 counts the number of fixed first carrier range ambiguities that differ from their counterpart fixed second carrier range ambiguities. If more than a predetermined proportion of the ambiguities are different, then both the first state vector and the second state vector are reset, in the "modifying" step 222. That is, all states of both state vectors are reset. In the present implementation, the predetermined proportion is 50%. The implication is that, if more than half of the fixed ambiguities have diverged, neither state vector can be trusted, and a reset of both is required. As explained above, the resetting may be "hard" or "soft".

In another example, the comparing step 220 may comprise counting the number of ambiguities that are fixed in each branch. If the second ambiguity resolution unit 114 has fixed more ambiguities than the first ambiguity resolution unit 112, then this may suggest that the first estimator has become unreliable. It may also indicate that the second estimator has a superior estimate of the non-ambiguity states. The two ambiguity resolution units 112 and 114 may differ in the number of ambiguities that they fix for several reasons. Firstly, each ambiguity resolution unit 112, 114 may choose to fix ambiguities at any given epoch only if a threshold level of confidence in the fixed ambiguities is met (or exceeded). A confidence value may be determined for the whole set of ambiguities collectively. If the confidence value is too low, the respective ambiguity resolution unit 112, 114 may choose not to fix any ambiguities for that epoch. This is the approach taken in the present implementation. In this way, the number of ambiguities fixed by each ambiguity resolution unit 112, 114 may differ (at the epoch at which they are fixed). The number of ambiguities fixed by the first ambiguity resolution unit 112 can also vary over successive epochs. As mentioned previously, the fixed ambiguities are fed back to the first estimator 102 in successive epochs. Provided phase lock is maintained, they may remain fixed indefinitely. However, phase lock may be lost for one or more satellite signals. When this happens, the fixed ambiguity is no longer valid. It can no longer be held fixed and should be re-estimated. Additionally, of course, the number of fixed ambiguities may also vary as satellites come into and out of view. If the second ambiguity resolution unit 114 has currently fixed more ambiguities than the first ambiguity resolution unit 112, then one of a number of courses of action may be followed in step 222. In the present implementation, the first state vector is modified in step 222 by replacing it with the second state vector. This is possible because both estimators 102 and 104 are based on Kalman filters with the same structure and same set of states. The assumption is that the set of ambiguities with more ambiguities fixed is more likely to be correct. In alternative implementations, states may be reset instead of replacing the first states with their respective second states.

Confidence measures associated with state vectors and/or their resulting fixed ambiguities may be calculated in a variety of ways. In the present implementation, a collective confidence value is calculated for each set of ambiguities, to determine whether or not to fix that set of ambiguities. In the present example, the confidence is based on the closeness of each float carrier range ambiguity to the respective fixed integer value. In particular, the confidence is determined based on the difference between the float and fixed values for the full set of ambiguities in the metric of the ambiguity covariance matrix, as follows:

$$(\hat{a} - \bar{a}_i)^T G_{\hat{a}}^{-1} (\hat{a} - \bar{a}_i)$$

Here, $\hat{a}$ is the vector of float values, $\bar{a}_i$ is the vector of fixed values of a given candidate set $i$ of fixed values, and $G_{\hat{a}}$ is the covariance matrix of the ambiguities. This distance metric is calculated for several candidate sets of fixed ambiguities, produced according to the LAMBDA algorithm. The best candidate set is identified as the candidate set with the smallest value of the distance metric. The second-best candidate set is identified as the candidate set with the second smallest value of the distance metric. In order to have high confidence in the best candidate set, we expect that the best candidate will be considerably closer to the float ambiguities than the second-best set. Consequently, the confidence in the best candidate set can be calculated as a ratio of the distances - the second smallest distance divided by the smallest distance. When this ratio is large (that is, much greater than 1), it suggests that the second smallest distance is considerably greater than the smallest distance (implying high confidence in the best candidate set). When this ratio is small (that is, close to 1) it suggests that the second smallest distance is comparable to the smallest distance (implying greater uncertainty and thus lower confidence in the best candidate set).

This confidence value, based on the ratio of second-best to best distances, in the metric of the covariance matrix, can be calculated for the first carrier range ambiguities at the epoch at which they are fixed and can also be calculated for the second carrier range ambiguities, at each epoch. For the avoidance of doubt, in each case the second-best candidate set is discarded after calculation of the confidence-ratio. The fixed first carrier range ambiguities and fixed second carrier range ambiguities are based on the best candidate set, in each case.

In the present implementation, all of the above comparison and modification rules are applied together. If a small number of fixed ambiguities is found to differ, between the fixed first and second carrier range ambiguities, then only these ambiguities are reset. If a larger number of fixed ambiguities is found to differ, then the state vectors of both estimators are reset in their entirety. Alternatively, if the ambiguity processing unit 120 has higher confidence in the fixed second carrier range ambiguities than in the fixed first carrier range ambiguities, then the first state vector may be replaced with the second state vector, and the covariance matrix associated with the first state vector may be replaced with the covariance matrix associated with the second state vector. Of course, it should be understood that the scope of the present disclosure is not limited to these rules. Different rules may also be designed and rules may be combined in different ways with different precedence.

Figs. 2 and 3 also show the step 230 of using the modified fixed ambiguities to estimate a position. In the example illustrated in Figs. 1-3, the position is estimated using a third estimator 130, separate from the first estimator 102 and the second estimator 104. This may be advantageous, because the update interval of the third estimator may be decoupled from the update interval of the first and second estimators 102 and 104. The third estimator 130 may have a simplified, reduced state vector, compared with the first and second estimators 102 and 104. For example, the third estimator 130 does not need to estimate ambiguities - it can concentrate on estimating position, velocity, and time. If the third estimator 130 has fewer states to estimate, it may be able to converge faster for a given level of computational effort. This means that the update interval of the third estimator 130 can be shorter than the update interval of the first and second estimators 102 and 104. This may be advantageous, because it allows more frequent position updates to be calculated. The validity of the ambiguity fixing can be checked on a less frequent basis. This can offer a good balance between computational effort and accuracy and latency of the PVT solution, since the activities involved in estimating, fixing, and validating the ambiguities are likely to be computationally more intensive. There may also be limited additional benefit from validating the ambiguities very frequently. In other words, more frequent validity checking may consume additional computational resources for little additional benefit in terms of the accuracy of the PVT solution.

Nevertheless, it is not essential to provide a separate third estimator 130. In other implementations, the PVT solution may be produced by the first estimator 102 (which includes state variables for position, velocity, and time also in the present implementation).

Indeed, it is not even essential to calculate a position as part of the method. In some applications, it may be useful to fix and validate ambiguities for other purposes. For example, after being modified in step 222, the fixed first ambiguities may be used to estimate ranging measurements, or corrections for ranging measurements. The fixed ambiguities, ranging measurements, or corrections may be used subsequently by another device - for example, to calculate its own position, velocity, and/or time.

It should be noted that the above-mentioned embodiments illustrate rather than limit the invention, and that those skilled in the art will be able to design many alternative embodiments without departing from the scope of the appended claims.

In the present implementation, as described above, full ambiguity resolution is used. That is, each ambiguity resolution unit 112, 114 attempts to fix all of the carrier range ambiguities in the respective state vector. This is not essential. In other examples, partial ambiguity resolution algorithms could be used. Techniques for partial ambiguity resolution as such are known in the art. In some examples, ambiguities may be transformed, via linear combinations of the original float carrier range ambiguities, to a space in which the ambiguities are decorrelated to a greater extent. The algorithm may then attempt to fix only some (that is, a partial set) of the ambiguities in this transformed space.

In general, other approaches may be used compare and modify fixed ambiguities (steps 220 and 222). For example, the comparing step 220 may comprise comparing uncertainties associated with each state vector. The estimator that has the lowest uncertainties of its states after fixing should be the best one (on the assumption that the system is modelled correctly and the fixing was correct). If the ambiguity processing unit determines that an uncertainty associated with the second state vector (after fixing of the second ambiguities) is lower than a respective uncertainty associated with the first state vector, then the step 222 of modifying the ambiguities may comprise replacing the first state vector with the second state vector. In other alternative implementations, states may be reset instead of replacing the first states with their respective second states.

In the examples described above, both the first estimator 102 and the second estimator 104 estimated the same state vector, and the first ambiguity resolution unit 112 and second ambiguity resolution unit 114 fixed the same set of carrier range ambiguities. This is not essential. In another example, the second estimator and second ambiguity resolution unit may fix a subset of ambiguities, and the first estimator and first ambiguity resolution unit may fix all of the ambiguities. In yet another example, the second estimator and second ambiguity resolution unit may fix one subset of ambiguities, and the first estimator and first ambiguity resolution unit may fix a different (overlapping or nonoverlapping) subset of ambiguities. For instance, the two estimators 102 and 104 may select SVs differently. The first estimator may include in its state vector only states associated with SVs that are higher than a first minimum threshold elevation above the horizon (for example, 20°). The second estimator may include in its state vector states associated with SVs that are higher than a second minimum threshold elevation above the horizon (for example, 10°). SVs at lower elevations above the horizon may be associated with a greater risk of multipath interference; therefore, using a higher elevation threshold may help to protect the first estimator from multipath effects (for example, in "urban canyons" - characterized by densely spaced and/or high-rise buildings). However, when the GNSS receiver emerges from the urban canyon and gets a better view of the sky, the second estimator may be faster to converge to a better set of fixed ambiguities, because of the additional satellite signals it is able to exploit.

In a further example, the estimators may rely on different models. For instance, one estimator might estimate ionosphere parameters and another estimator might not; or different estimators might make different assumptions about noise type or biases etc. In some examples, the estimators may take different measurements as inputs.

It should also be understood that, in general, more than two different ambiguity-fixing strategies may be employed. There may be one or more further estimators and respective ambiguity resolution units, which apply respective different strategies for fixing the ambiguities. The ambiguity processing unit 120 may therefore compare the fixed first carrier range ambiguities with more sets of fixed ambiguities, and may modify them according to the results of all the comparisons. This can allow additional verification of the validity of the fixed first ambiguities, by comparing them with diverse further sets of fixed ambiguities.

In the example of Figs. 1-3, the first, second, and third estimators 102, 104, 130 are all Kalman filters. However, it should be understood that this is not essential. Some or all of the estimators may be of different types. Suitable alternative types of estimator include but are not limited to: variants of the Kalman filter - such as the extended Kalman filter (EKF) and the unscented Kalman filter (UKF) - or a least squares (LS) estimator.

In the example described above, the LAMBDA algorithm was used by the ambiguity resolution units 112 and 114 to fix ambiguities. It should be understood that other algorithms are available and may be used instead. One extension of the LAMBDA algorithm is the Best Integer Equivariant (BIE) estimation algorithm (see, for example: P. J. G. Teunissen, "Theory of integer equivariant estimation with application to GNSS", Journal of Geodesy (2003) 77: 402-410). This fixes several candidate sets of integer ambiguities, and then performs a weighted average to determine the final fixed ambiguities. Therefore, although the ambiguities are fixed to integers during the process, the final output of the fixing algorithm comprises floating-point fixed carrier range ambiguities.

Confidence in the fixed ambiguities may also be evaluated in different ways. The example was given of calculating a confidence ratio, comparing the best candidate set with the second-best candidate set. This is indeed one convenient and informative way to evaluate the confidence; however, it is by no means essential to adopt this approach. In general, any measure of the quality of the fixed solution may be adopted as a confidence measure. As explained above, in some examples, the fixing of ambiguities, by the first ambiguity resolution unit 112 and the second ambiguity resolution unit 114, may be dependent on the confidence measure. In particular, ambiguities may only be fixed (and fed back, to the first estimator 102) if the confidence value associated with them is above a threshold.

In the example of Fig. 1, the entire method - including estimating states, fixing ambiguities, selecting a set of fixed ambiguities, and estimating the position - was carried out on board a navigation processor 100 of a GNSS receiver. However, this is not essential. Some or all the steps of the method may be carried out by a different apparatus. In some examples, some or all of the processing may be delegated to a server computer, for example in a cloud computing environment. The server computer may implement functions corresponding to some or all of the blocks 102, 104, 112, 114, 116, 120, and 130 (for example, as similar software functional blocks). Therefore, the server computer may carry out some or all of steps 202, 204, 212, 214, 220, 222, 230, and 242.

Other variations involve the way that the blocks 102, 104, 112, 114, 116, 120, and 130 are implemented. In the example discussed above, these units were defined in software or software modules running on the navigation processor 100 of the GNSS receiver. However, in other examples, some or all of these units may be implemented in dedicated, fixed-function hardware.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general-purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

## Claims

1. A method of verifying fixed ambiguities based on GNSS signals, the method comprising, at a first epoch:

   estimating (202a) a first state vector comprising a first set of float carrier range ambiguities using a first estimator (102), based on first observations of the GNSS signals;
   fixing (212a) one or more first carrier range ambiguities based on the first set of float carrier range ambiguities,
   the method further comprising, at a second epoch:

   estimating (202b) a portion of the first state vector using the first estimator (102), based on new first observations of the GNSS signals, wherein the fixed one or more first carrier range ambiguities from the first epoch are held constant, and wherein estimating the portion of the first state vector comprises estimating states of the first state vector other than those that are held constant;
   estimating (204b) a second state vector comprising a second set of float carrier range ambiguities using a second estimator (104), based on second observations of the GNSS signals;
   fixing (214b) one or more second carrier range ambiguities based on the second set of float carrier range ambiguities;
   comparing (220) the fixed one or more first carrier range ambiguities with the fixed one or more second carrier range ambiguities; and
   modifying (222) at least one of the fixed one or more first carrier range ambiguities based on a result of the comparing.

2. The method of claim 1, wherein the comparing (220) comprises determining that at least one of the fixed one or more first carrier range ambiguities is different from a corresponding one of the fixed one or more second carrier range ambiguities.

3. The method of claim 1 or claim 2, wherein the comparing (220) comprises determining that more than a predetermined proportion of the fixed first carrier range ambiguities are different from the corresponding fixed second carrier range ambiguities.

4. The method of any one of claims 1-3, wherein the comparing (220) comprises determining that a number of fixed second carrier range ambiguities is greater than a number of fixed first carrier range ambiguities, or
determining that an uncertainty associated with the second state vector after fixing of the second carrier range ambiguities is lower than a respective uncertainty associated with the first state vector.

5. The method of any one of the preceding claims, wherein modifying (222) the at least one of the fixed one or more first carrier range ambiguities comprises resetting it.

6. The method of any one of the preceding claims, wherein modifying (222) the at least one of the fixed one or more first carrier range ambiguities comprises resetting all of the fixed one or more first carrier range ambiguities and/or resetting all of the fixed one or more second carrier range ambiguities.

7. The method of any one of the preceding claims, wherein modifying (222) the at least one of the fixed one or more first carrier range ambiguities comprises replacing the fixed one or more first carrier range ambiguities with the fixed one or more second carrier range ambiguities.

8. The method of any one of the preceding claims, wherein the second estimator (104) estimates a different set of states from the first estimator (102).

9. The method of claim 8, wherein the set of states estimated by the second estimator (104) is selected based on one or more of the following criteria:

   selecting GNSS signals that have a carrier-to-noise ratio above a predetermined threshold; and
   selecting GNSS signals of SVs that are higher than a minimum predetermined elevation above the horizon.

10. The method of any one of the preceding claims, further comprising, at the second epoch:

   estimating a further state vector comprising a further set of float carrier range ambiguities using a further estimator, based on observations of the GNSS signals;
   fixing one or more further carrier range ambiguities based on the further set of float carrier range ambiguities;
   comparing the fixed one or more first carrier range ambiguities with the fixed one or more further carrier range ambiguities; and

modifying at least one of the fixed one or more first carrier range ambiguities based on a result of the comparing.

11. The method of any one of the preceding claims wherein a position is estimated (230) based on the fixed one or more first carrier range ambiguities using a third estimator (130).

12. The method of any one of the preceding claims, wherein the new first observations and the second observations comprise or consist of the same observations.

13. A computer program comprising computer program code configured to cause one or more physical computing devices to perform all the steps of the method as claimed in any one of the preceding claims when said computer program is run on said one or more physical computing devices.

14. An apparatus configured to verify fixed ambiguities based on GNSS signals, the apparatus comprising:

a first estimator (102), configured to, at a first epoch, estimate (202a) a first state vector comprising a first set of float carrier range ambiguities, based on first observations of the GNSS signals; and

a first ambiguity resolution unit (112), configured to, at the first epoch, fix (212a) one or more first carrier range ambiguities based on the first set of float carrier range ambiguities, the fixed one or more first carrier range ambiguities being fed back to the first estimator (102) at a second epoch,

wherein the first estimator (102) is further configured to, at the second epoch, estimate (202b) a portion of the first state vector, based on new first observations of the GNSS signals, wherein the fed-back fixed one or more first carrier range ambiguities from the first epoch are held constant, and wherein estimating (202b) the portion of the first state vector comprises estimating states of the first state vector other than those that are held constant,

the apparatus further comprising:

a second estimator (104), configured to, at the second epoch, estimate (204b) a second state vector comprising a second set of float carrier range ambiguities, based on second observations of the GNSS signals;

a second ambiguity resolution unit (114), configured to, at the second epoch, fix (214b) one or more second carrier range ambiguities based on the second set of float carrier range ambiguities; and

an ambiguity processing unit (120), configured to:

compare (220) the fixed one or more first carrier range ambiguities with the fixed one or more second carrier range ambiguities, and

modify (222) at least one of the fixed one or more first carrier range ambiguities based on a result of the comparing.

The apparatus may be configured to estimate a position based at least in part on the modified at least one of the fixed one or more first carrier range ambiguities.

15. The apparatus of claim 14, further comprising a third estimator (130), wherein the third estimator (130) is configured to estimate (230) the position based at least in part on the modified at least one of the fixed one or more first carrier range ambiguities.

**FIG. 1**

**FIG. 2**

200

201 — GNSS OBSERVABLES

204 — ESTIMATE SECOND STATE VECTOR

214 — FIX SECOND AMBIGUITY(IES)

202 — ESTIMATE FIRST STATE VECTOR

212 — FIX FIRST AMBIGUITY(IES)

242 — FEED BACK

220 — COMPARE

222 — MODIFY

230 — ESTIMATE POSITION

**FIG. 3**

EP 4 145 182 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/196024 A1 (CHEN XIAOMING [DE] ET AL) 27 June 2019 (2019-06-27) <br> * figures 1a-1b, 2, 3b-3c, 4b, 5b, 7b, 15a-15b, 18b, 20 * <br> * paragraphs [0049] - [0125], [0136] - [0137] * <br> * paragraphs [0142] - [0219] * | 1-15 | INV. <br> G01S19/44 |
| Y | US 2005/001763 A1 (HAN SHAOWEI [US] ET AL) 6 January 2005 (2005-01-06) <br> * figures 4-5 * <br> * paragraphs [0009] - [0022], [0032] - [0081] * <br> * paragraphs [0097] - [0103], [0108] - [0114] * | 1-15 | |
| Y | US 2013/265192 A1 (DAI LIWEN [US] ET AL) 10 October 2013 (2013-10-10) <br> * figures 2-8 * <br> * paragraphs [0021] - [0078] * | 1-15 | |
| | | | TECHNICAL FIELDS SEARCHED (IPC) <br><br> G01S |

The present search report has been drawn up for all claims

| Place of search | Date of completion of the search | Examiner |
|---|---|---|
| Munich | 8 April 2022 | Tancredi, Urbano |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

 

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 21 19 4629

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2022

| Patent document cited in search report | | Publication date | Patent family member(s) | | Publication date |
|---|---|---|---|---|---|
| US 2019196024 | A1 | 27-06-2019 | EP | 3502747 A1 | 26-06-2019 |
| | | | US | 2019196024 A1 | 27-06-2019 |
| US 2005001763 | A1 | 06-01-2005 | NONE | | |
| US 2013265192 | A1 | 10-10-2013 | AU | 2011209916 A1 | 10-05-2012 |
| | | | BR | 112012014776 A2 | 19-09-2017 |
| | | | CA | 2787290 A1 | 04-08-2011 |
| | | | CN | 102713675 A | 03-10-2012 |
| | | | CN | 103885074 A | 25-06-2014 |
| | | | EP | 2529250 A2 | 05-12-2012 |
| | | | RU | 2012134775 A | 10-03-2014 |
| | | | US | 2011187598 A1 | 04-08-2011 |
| | | | US | 2013265192 A1 | 10-10-2013 |
| | | | WO | 2011094091 A2 | 04-08-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TEUNISSEN PJG.** The least-squares ambiguity decorrelation adjustment: a method for fast GPS integer ambiguity estimation. *Journal of Geodesy,* 1995, vol. 70, 65-82

- **P. J. G. TEUNISSEN.** Theory of integer equivariant estimation with application to GNSS. *Journal of Geodesy,* 2003, vol. 77, 402-410